# FASCICULE DE BREVET EUROPEEN

(11) **EP 3 233 584 B1**
(45) Date de publication et mention de la délivrance du brevet: **24.07.2019**
(21) Numéro de dépôt: 15817934.1
(22) Date de dépôt: 16.11.2015
(51) Int. Cl.: B60R 22/22, B60R 22/24, B62D 25/20

(54) **FIXATION D'UN ENROULEUR DE CEINTURE DE SECURITE SUR LE PIED MILIEU DU VEHICULE, RENFORCEE TRANSVERSALEMENT**
TRANSVERSAL VERSTÄRKTE BEFESTIGUNG EINES SICHERHEITSGURTAUFROLLERS AUF DER MITTIGEN SÄULE EINES FAHRZEUGS
TRANSVERSELY REINFORCED FIXATION OF A SAFETY BELT RETRACTOR ON THE B-PILLAR OF A VEHICLE

(30) Priorité: 17.12.2014 FR 1462582
(43) Date de publication de la demande: 25.10.2017
(73) Titulaire: RENAULT s.a.s., 92100 Boulogne-Billancourt (FR)
(72) Inventeur: LEFEBVRE, Benjamin, 91470 Les Molières (FR)
(86) Numéro de dépôt international: PCT/FR2015/053081
(87) Numéro de publication internationale: WO 2016/097509

(56) Documents cités:
- WO-A1-2014/188099
- JP-A- 2010 247 613
- JP-A- 2014 113 931

## Description

La présente invention concerne un véhicule automobile comprenant un système de fixation d'un enrouleur de ceinture dans la caisse d'un véhicule.

Les véhicules automobiles comportent généralement à chaque place des ceintures de sécurité disposant d'un enrouleur automatique équipé d'un ressort qui enroule la sangle quand elle est libérée, de boucles de passage de cette sangle pour guider son parcours, et d'un crochet s'engageant dans un verrou correspondant pour verrouiller cette ceinture sur le passager.

L'enrouleur automatique comporte des dispositifs bloquant automatiquement le déroulage de la sangle dans différents cas causés par un accident, comprenant notamment une traction très rapide sur la sangle, une très forte accélération du véhicule ou son inclinaison trop importante.

Un type d'enrouleur connu comporte une bille métallique faisant office de capteur d'accélération ou d'inclinaison de cet enrouleur, qui par son mouvement bloque le déroulage de la sangle.

Par ailleurs les ceintures des passagers avant comportent généralement un enrouleur fixé en bas du montant vertical de la caisse se trouvant à l'arrière des portes avant, appelé aussi pied milieu, comprenant sa base soudée sur un longeron latéral de la caisse. Les ceintures comportent aussi une boucle de passage fixée à hauteur des épaules sur ce pied milieu, qui renvoie la sangle vers le verrou disposé entre les deux sièges avant.

La fixation de l'enrouleur doit résister à des sollicitations importantes, notamment verticales suivant l'axe « Z » du véhicule en cas d'accident quand l'enrouleur se bloque, la traction sur la sangle maintenant le passager étant importante.

Un système de fixation connu de l'enrouleur en bas du pied milieu comprenant une tôle de doublure disposée du côté intérieur de ce pied, comporte un support sensiblement vertical recevant en partie supérieure cet enrouleur, sa partie inférieure descendant pour être fixée sur la tôle de doublure, afin de résister à la traction verticale de la sangle.

Toutefois un problème qui peut se poser dans certains cas, notamment avec un enrouleur comportant une masse plus importante que celle prévue initialement, est que la flexibilité latérale de son support, suivant l'axe transversal « Y » du véhicule, peut être trop élevée. On obtient alors dans ce cas un mode propre vibratoire de l'enrouleur suivant cet axe Y qui est en-dessous d'une fréquence limite nécessaire pour éviter des bruits.

En particulier une fréquence vibratoire propre trop basse de l'enrouleur, par exemple inférieure à 30Hz, peut exciter la bille de blocage du déroulage, qui émet alors dans l'habitacle un bruit désagréable.

Le document WO 2014/188099A1 décrit un véhicule automobile comprenant un système de fixation d'un enrouleur de ceinture de sécurité sur le pied milieu de la caisse, d'après le préambule de la revendication 1.

La présente invention a notamment pour but d'éviter les inconvénients de la technique antérieure et d'offrir une solution optimisée de fixation d'un enrouleur de ceinture de sécurité.

Elle propose à cet effet un véhicule automobile comprenant un système de fixation d'un enrouleur de ceinture de sécurité sur le pied milieu de la caisse d'un véhicule, la base de ce pied milieu étant fixée sur un longeron latéral de la caisse, l'enrouleur étant fixé en haut d'un support comprenant une partie inférieure fixée sur une tôle de doublure du pied milieu, qui est disposée du côté intérieur de ce pied, caractérisé en ce qu'il comporte un tirant sensiblement vertical dont l'extrémité supérieure est fixée au support au niveau de la fixation de l'enrouleur, et l'extrémité inférieure est fixée sur le longeron, latéralement vers son côté extérieur.

Un avantage de ce système de fixation est que le tirant qui peut être réalisé par une tôle emboutie, constitue un moyen simple, efficace et économique s'ajoutant facilement sur la caisse du véhicule, pour renforcer la raideur de la fixation de l'enrouleur suivant l'axe transversal Y. On obtient alors une fréquence propre suivant cet axe qui est plus élevée, ce qui peut éliminer certains bruits, en particulier des bruits dus aux vibrations de la bille de blocage de l'enrouleur.

Le véhicule automobile comprenant un système de fixation d'un enrouleur selon l'invention peut de plus comporter une ou plusieurs des caractéristiques suivantes, qui peuvent être combinées entre elles.

Avantageusement, le tirant est réalisé dans une tôle découpée et pliée. Ce procédé de fabrication permet de réaliser des formes complexes de manière économique.

En particulier le tirant peut former une bande sensiblement verticale, comportant des rebords pliés sur ses côtés tournés vers l'avant et l'arrière du véhicule.

Avantageusement, le tirant comporte dans sa partie supérieure une forme prévue pour recevoir des fixations de l'enrouleur sur le support. Cette partie supérieure du tirant est ainsi fixée directement en même temps que l'enrouleur, sans utiliser de moyen de fixation supplémentaire.

En particulier, la forme peut comporter un perçage prévu pour recevoir une vis de fixation de l'enrouleur.

Avantageusement, l'extrémité inférieure du tirant comporte un perçage prévu pour recevoir une vis de fixation sur le longeron.

Avantageusement, la partie supérieure du tirant comporte des découpes prévues pour recevoir des pattes de fixation de l'enrouleur sur le support.

L'invention sera mieux comprise et d'autres avantages apparaîtront plus clairement à la lecture de la description ci-après donnée à titre d'exemple, en référence aux dessins annexés dans lesquels :
- la figure 1 est un schéma présentant en coupe transversale la fixation de l'enrouleur suivant l'art antérieur ;
- la figure 2 est un schéma présentant en coupe transversale la fixation de l'enrouleur suivant l'invention ; et
- la figure 3 est une vue en perspective de la fixation d'un enrouleur suivant l'invention.

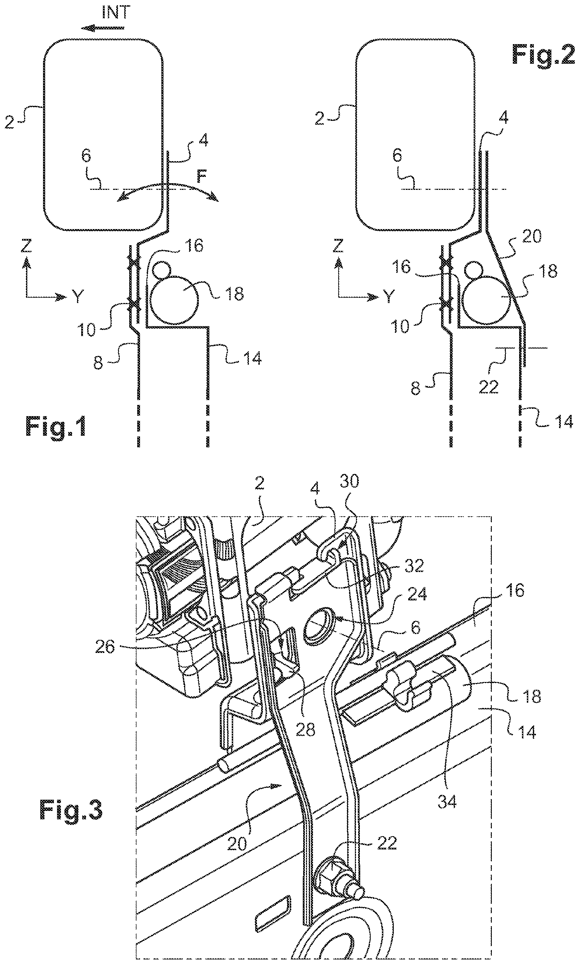

La figure 1 présente un enrouleur de ceinture de sécurité 2 fixé en haut d'un support 4 par une vis transversale 6, sur sa face tournée vers le côté intérieur du véhicule, indiqué par une flèche « INT ».

Le support 4 présente dans sa partie centrale deux coudes qui forment un décalage vers l'intérieur du véhicule. La partie inférieure de ce support 4 est fixée par deux points de fixations 10 sur la face extérieure de la doublure intérieure 8 du pied milieu du véhicule, qui est disposée latéralement vers le côté intérieur du longeron transversal de la caisse du véhicule.

Un bavolet 14 constituant un profil longitudinal recouvrant le côté extérieur du longeron, comporte dans sa partie supérieure deux coudes qui forment un décalage vers l'intérieur, pour se terminer par un rebord vertical tourné vers le haut 16 venant près de la base du support 4.

Des câbles 18 courant suivant la direction longitudinale du véhicule, sont fixés sur la partie horizontale du bavolet 14, entre les deux coudes formant le décalage vers l'intérieur.

On constate avec ce type de montage une bonne résistance de l'enrouleur 2 suivant l'axe vertical Z, maintenu par le support 4 disposé sensiblement verticalement, mais une certaine flexibilité suivant l'axe Y pouvant provoquer des vibrations transversales de la masse constituant cet enrouleur, indiquées par la flèche F.

En particulier si on augmente la masse de l'enrouleur, on obtient un mode propre de cet enrouleur suivant l'axe transversal présentant une fréquence plus basse, pouvant être excitée en mettant en mouvement la bille de blocage interne, ce qui entraîne des bruits.

Les figures 2 et 3 présentent un tirant 20 réalisé par une tôle découpée et pliée, formant une bande disposée sensiblement verticalement, présentant une partie inférieure fixée par une vis 22 sur la face extérieure du bavolet 14, et une partie supérieure légèrement décalée vers le côté intérieur par deux coudes comportant un angle réduit.

Le tirant 20 est bordé sur ses côtés avant et arrière par un rebord formé par un pliage de la tôle, qui le rigidifie.

La partie supérieure du tirant 20 forme un plan vertical venant en appui sur la face extérieure de la partie supérieure du support 4. Un perçage central 24 de ces parties supérieures reçoit la vis transversale 6 qui fixe l'enrouleur 2 sur ces deux tôles, on réalise ainsi dans une même opération la fixation de l'enrouleur 2 et du tirant 20 sur le support 4.

La partie supérieure du tirant 20 comporte des découpes formant des dégagements, comprenant un perçage 26 recevant un crochet 28 de l'enrouleur 2 fixé sur le support 4, et une découpe supérieure 30 recevant une patte pliée 32 fixée aussi sur ce support.

Les câbles 18 fixés par des clips 34 sur le bavolet 14, sont disposés dans le passage latéral laissé disponible entre le tirant 20 et le rebord vertical supérieur 16 de ce bavolet.

On obtient ainsi avec le support 4 dont la base est fixée sur la tôle de doublure 8 venant sur le côté intérieur du longeron, et le tirant 20 dont la base est fixée sur la tôle de doublure venant sur le côté extérieur de ce longeron, de deux moyens de fixation de l'enrouleur 2 espacés latéralement, qui forment une structure comprenant une forte rigidité transversale.

Des essais ont montré que ce type de système de fixation présenté figure 3, a permis de modifier le mode propre vibratoire d'un enrouleur suivant l'axe transversal qui comportait à l'origine une fréquence de 17Hz, pour donner une fréquence de 40Hz se trouvant nettement au-dessus d'un besoin minimum de 30Hz.

## Revendications

1. Véhicule automobile comprenant un système de fixation d'un enrouleur de ceinture de sécurité (2) sur le pied milieu de la caisse du véhicule, la base de ce pied milieu étant fixée sur un longeron latéral de la caisse, l'enrouleur étant fixé en haut d'un support (4) comprenant une partie inférieure fixée sur une tôle de doublure du pied milieu (8), qui est disposée du côté intérieur de ce pied, **caractérisé en ce qu'**il comporte un tirant (20) sensiblement vertical dont l'extrémité supérieure est fixée au support (4) au niveau de la fixation de l'enrouleur (6), et l'extrémité inférieure est fixée sur le longeron, latéralement vers son côté extérieur.

2. Véhicule automobile selon la revendication 1, **caractérisé en ce que** le tirant (20) est réalisé dans une tôle découpée et pliée.

3. Véhicule automobile selon la revendication 2, **caractérisé en ce que** le tirant (20) forme une bande sensiblement verticale, comportant des rebords pliés sur ses côtés tournés vers l'avant et l'arrière du véhicule.

4. Véhicule automobile selon l'une quelconque des revendications précédentes, **caractérisé en ce que** le tirant (20) comporte dans sa partie supérieure une forme (24) prévue pour recevoir des fixations (6) de l'enrouleur (2) sur le support (4).

5. Véhicule automobile selon la revendication 4, **caractérisé en ce que** la forme comporte un perçage (24) prévu pour recevoir une vis de fixation (6) de l'enrouleur (2).

6. Véhicule automobile selon l'une quelconque des revendications précédentes, **caractérisé en ce que** l'extrémité inférieure du tirant (20) comporte un perçage prévu pour recevoir une vis de fixation (22) sur le longeron.

7. Véhicule automobile selon l'une quelconque des revendications précédentes, **caractérisé en ce que** la partie supérieure du tirant (20) comporte des découpes (26, 30) prévues pour recevoir des pattes de fixation (28, 32) de l'enrouleur (2) sur le support (4).

## Patentansprüche

1. Kraftfahrzeug, welches ein System zur Befestigung eines Sicherheitsgurtaufrollers (2) an der Mittelsäule der Karosserie des Fahrzeugs umfasst, wobei der Fuß dieser Mittelsäule an einem seitlichen Längsträger der Karosserie befestigt ist, wobei der Aufroller oben an einem Halter (4) befestigt ist, der einen unteren Teil umfasst, der an einem Verkleidungsblech der Mittelsäule (8) befestigt ist, welches auf der Innenseite dieser Säule angeordnet ist, **dadurch gekennzeichnet, dass** es einen im Wesentlichen vertikalen Zuganker (20) umfasst, dessen oberes Ende an dem Halter (4) im Bereich der Befestigung des Aufrollers (6) befestigt ist und dessen unteres Ende an dem Längsträge seitlich, zu seiner Außenseite hin, befestigt ist.

2. Kraftfahrzeug nach Anspruch 1, **dadurch gekennzeichnet, dass** der Zuganker (20) aus einem gestanzten und gebogenen Blech hergestellt ist.

3. Kraftfahrzeug nach Anspruch 2, **dadurch gekennzeichnet, dass** der Zuganker (20) ein im Wesentlichen vertikales Band bildet, das an seinen der Vorderseite und der Rückseite des Fahrzeugs zugewandten Seiten umgebogene Ränder aufweist.

4. Kraftfahrzeug nach einem der vorhergehenden Ansprüche, **dadurch gekennzeichnet, dass** der Zuganker (20) in seinem oberen Teil eine Form (24) aufweist, die dafür vorgesehen ist, Befestigungen (6) des Aufrollers (2) am Halter (4) aufzunehmen.

5. Kraftfahrzeug nach Anspruch 4, **dadurch gekennzeichnet, dass** die Form eine Bohrung (24) aufweist, die dafür vorgesehen ist, eine Befestigungsschraube (6) des Aufrollers (2) aufzunehmen.

6. Kraftfahrzeug nach einem der vorhergehenden Ansprüche, **dadurch gekennzeichnet, dass** das untere Ende des Zugankers (20) eine Bohrung aufweist, die dafür vorgesehen ist, eine Schraube (22) zur Befestigung am Längsträger aufzunehmen.

7. Kraftfahrzeug nach einem der vorhergehenden Ansprüche, **dadurch gekennzeichnet, dass** der obere Teil des Zugankers (20) Ausschnitte (26, 30) aufweist, die dafür vorgesehen sind, Laschen (28, 32) zur Befestigung des Aufrollers (2) am Halter (4) aufzunehmen.

## Claims

1. Motor vehicle comprising a system for attaching a seat-belt retractor (2) onto the center pillar of the body of the vehicle, the base of said center pillar being attached onto a side rail of the body, the retractor being attached to the top of a bracket (4) comprising a bottom portion attached to a lining panel of the center pillar (8), which is arranged on the inner side of said pillar, **characterized in that** it comprises a substantially vertical tie rod (20), the upper end of which is attached to the bracket (4) at the retractor attachment (6), and the lower end of which is attached onto the side rail, sideways towards the outer side thereof.

2. Motor vehicle according to Claim 1, **characterized in that** the tie rod (20) is produced from a cut and folded metal sheet.

3. Motor vehicle according to Claim 2, **characterized in that** the tie rod (20) forms a substantially vertical strip, comprising rims folded over the sides of same turned towards the front and the rear of the vehicle.

4. Motor vehicle according to any one of the preceding claims, **characterized in that** the tie rod (20) comprises, in the top portion of same, a shape (24) designed to receive attachments (6) for attaching the retractor (2) to the bracket (4).

5. Motor vehicle according to Claim 4, **characterized in that** the shape comprises a bore (24) designed to receive an attachment screw (6) for attaching the retractor (2).

6. Motor vehicle according to any one of the preceding claims, **characterized in that** the lower end of the tie rod (20) comprises a bore designed to receive an attachment screw (22) for attaching to the side rail.

7. Motor vehicle according to any one of the preceding claims, **characterized in that** the top portion of the tie rod (20) comprises cut-outs (26, 30) designed to receive attachment tabs (28, 32) for attaching the retractor (2) to the bracket (4).
